## Europäisches Patentamt

## European Patent Office

## Office européen des brevets

(19)

(11) Veröffentlichungsnummer **0 011 174 B2**

(12) # NEUE EUROPÄISCHE PATENTSCHRIFT

(45) Veröffentlichungstag der neuen Patentschrift:
19.09.84

(51) Int. Cl.³: **A 21 D 2/26**

(21) Anmeldenummer: **79104195.7**

(22) Anmeldetag: **29.10.79**

(54) **Hocheiweissangereicherte Backwaren.**

(30) Priorität: **04.11.78 DE 2847876**

(43) Veröffentlichungstag der Anmeldung:
**28.05.80 Patentblatt 80/11**

(45) Bekanntmachung des Hinweises auf die Patenterteilung:
**10.02.82 Patentblatt 82/6**

(45) Bekanntmachung des Hinweises auf die Entscheidung
über den Einspruch:
**19.09.84 Patentblatt 84/38**

(84) Benannte Vertragsstaaten:
**AT CH DE FR GB NL**

(56) Entgegenhaltungen:
DE - A - 2 336 562
FR - A - 2 304 294
GB - A - 987 174
NL - A - 263 463
NL - C - 93 396
NL - C - 103 048
US - A - 2 086 184
US - A - 4 109 025

The Technology of Bread-Making (W.Jago) (1911)- S. 472
A Treatise on Baking (E. Wihlfahrt) (1911) - S. 13-16
FSTA Vol. 6, S. 136 (1974)
Bakery-Technology and Engineering (S.A. Matz) (1960)
S. 12
Practical Baking (W.J. Sultan) (1969)- S. 118-119

(73) Patentinhaber: **Kali-Chemie Aktiengesellschaft,
Postfach 220 Hans-Böckler-Allee 20,
D-3000 Hannover 1 (DE)**

(72) Erfinder: **Battermann, Winfried, Ing. (grad.),
Wilhelm-Busch-Strasse 16, D-3012 Langenhagen (DE)**

(56) Entgegenhaltungen: (Fortsetzung)
**Bakery-Technology and Engineering (S.A. Matz) (1960)
S. 134/135**

## Beschreibung

Die Erfindung bezieht sich auf eine zur Herstellung von hocheiweißangereicherten Backwaren mit einem Eiweißgehalt von mindestens 70 Gew.-%, bezogen auf Trockensubstanz, bestimmte Mischung, ein Verfahren zum Backen dieser Mischung und aus der Mischung mit Hilfe des Verfahrens erhaltene Backwaren, wie beispielsweise Frühstücksbrötchen oder Knabberartikel mit einem zarten Biß in Verbindung mit einer wohlschmeckenden Rösche.

Aus DE-A-2 428 699, DE-A-2 530 164 und der DE-B-2 438 597 sind verschiedene eiweißangereicherte Backwaren bzw. Verfahren zu deren Herstellung bekannt. Jene Backwaren sind jedoch in erster Linie auf den Diabetikerkreis ausgerichtet und enthalten neben der Proteinanreicherung hauptsächlich Zuckeraustauschstoffe und Verdickungsmittel.

Die beschriebenen Produkte sind nach neuesten ernährungsphysiologischen Empfehlungen der FAO/WHO nicht optimal in der Zusammensetzung der Basisstoffe, wie z. B. der Aminosäurebilanz, Fettsäure- und Kohlenhydratverteilung. Auch die Verwendung von 5 bis 15% natürlichen bzw. chemisch modifizierten Hydrokolloiden sind von der Ernährungsphysiologie sehr umstritten, zumal diese Substanzen keine Nährsubstrate im eigentlichen Sinne darstellen, sondern dem Konsumenten nur ein Sättigungsgefühl geben. Ernährt man sich ausschließlich von solchen Produkten, so kann es zu empfindlichen Stoffwechselstörungen kommen. Auch ein bereits auf dem Lebensmittelmarkt befindliches Weizenkleberbrötchen, das in kleinen Stückzahlen hergestellt wird, entspricht in der Stoffzusammensetzung nicht den FAO/WHO-Empfehlungen. Außerdem weichen die Beschaffenheit, Konsistenz und der Geschmack stark von den herkömmlichen Brötchen ab. Besonders das Kaugefühl in Verbindung mit der lederartigen Konsistenz geben diesem Produkt einen fremdartigen Geschmackseindruck. In belegter Form und nach längerem Stehen wird das Produkt schwammig und verliert seine Rösche.

Ziel der Erfindung war es, eine backfähige Masse herzustellen, die vom ernährungsphysiologischen Standpunkt aus eine optimale Zusammensetzung hinsichtlich der Aminosäurebilanz darstellt und in gebackener Form den traditionellen Geschmacksvorstellungen in punkto Frühstücksbrötchen und Knabberartikel entsprach. Außerdem sollten in dem Produkt keine Zuckeraustauschstoffe, Verdickungsmittel und Emulgatoren enthalten sein. Auch hinsichtlich der Lagerfähigkeit sollte das Produkt nach Möglichkeit unbegrenzt haltbar sein, ohne dabei seine typischen Produktmerkmale zu verlieren.

Die Aufgabenstellung wurde in zwei Schritten gelöst, bestehend aus der Basisrezeptur und dem speziellen Herstellungsprozeß, der sich von den bekannten Backprozessen gravierend unterscheidet.

Die Basisrezeptur setzt sich aus einem Eiweißgemisch, Weizenkleie, Salz, Wasser und einem Triebmittel zusammen. Je nach den Erfordernissen können der Rezeptur Vitamine, Mineralstoffe und/oder Geschmacksstoffe hinzugesetzt werden.

Die Eiweißmischung besteht aus einem vitalen, backfähigen Weizeneiweißkleber, einem nativen ultrafiltrierten Molkeneiweißkonzentrat und einem denaturierten, quellfähigen Sojaeiweißkonzentrat. Das Mischungsverhältnis untereinander sieht wie folgt aus:

|  | Bandbreite in % | Vorzugsweise in % |
|---|---|---|
| Weizeneiweißkleber*) mind. 81% Eiweiß i. TS | 74—84 | 81,5 |
| Molkeneiweißkonzentrat**) mind. 78% Eiweiß i. TS | 15—12 | 11,7 |
| Sojaeiweißkonzentrat***) mind. 72% Eiweiß i. TS | 11—4,0 | 6,8 |

*) Erhältlich von der Fa. KSH-Emslandstärke GmbH, Emlichheim.
**) Erhältlich von der Fa. Kali-Chemie AG, Hannover, unter der Bezeichnung Ultralac 90.
***) Erhältlich von der Fa. Arhus Olie Fabriek, A.S., Arhus, unter der Bezeichnung Danpro H.

Innerhalb der Mischungsbandbreite können die Eiweißkomponenten frei variiert werden. Bei dem Überschreiten bzw. Unterschreiten der Toleranzgrenzen wird der Teig zäh bis stark klebend, so daß eine weitere maschinelle Bearbeitung inklusive der Formgebung ausgeschlossen ist.

Aufgrund der in der Rezeptur verwendeten cellulosearmen Ingredienzen wurde das Produkt zusätzlich mit einer speziellen gereinigten und gewaschenen Weizenkleie (erhältlich von der Fa. Milupa, Friedrichsdorf/Taunus) bzw. einer Grieskleie mit einem Anteil von 2,5 bis 6,5%, vorzugsweise 4,5%, versetzt. Durch den Zusatz der Weizenkleie wird bei einer ausschließlichen Ernährung mit diesen Produkten, z. B. einer Reduktionskost, einer möglichen auftretenden peristaltischen Störung der Verdauungsorgane mit Erfolg entgegengewirkt. Von der Verwendung ungereinigter Weizenkleie ist abzuraten, da diese Rohweizenkleie dem Fertigprodukt einen unangenehmen Cerealien- bis bitteren Geschmack gibt.

Um neben einer optimalen Aminosäurebilanz auch die ernährungsphysiologisch wichtige Fettsäurebilanz zu berücksichtigen, wird in Weiterbildung des Erfindungsgedankens der Mischung zusätzlich Distelöl bei entsprechender Minderung des Wasseranteils zugesetzt. Das Distelöl zeichnet sich durch einen hohen Anteil an mehrfach ungesättigten Fettsäuren aus. Um die ernährungsphysiologische Bilanz der essentiellen Fettsäuren noch zu optimieren, wurde dem Distelöl — bezogen auf die Zusatzmenge — noch 4% Weizenkeimöl hinzugesetzt. Dies hatte gleichzeitig den Vorteil, daß man dadurch auf natürliche Weise Tocopherol (Vitamin E) als Antioxidanz mit in die Rezeptur einverleibte.

Das Basisrezept stellt sich somit wie folgt dar:

|  | Bandbreite in % | Vorzugsweise in % |
|---|---|---|
| Vitalweizenkleber | 28 — 38 | 35,0 |
| UF-Molkenprotein | 4 — 8 | 5,0 |
| Sojaeiweißkonzentrat, denaturiert | 1,5 — 5,5 | 2,9 |
| Weizenkleie | 2,5 — 6,5 | 4,5 |
| Distelöl | 1 — 2 | 1,5 |
| Salz | 0,7 — 1,5 | 0,9 |
| Trockenhefe | 1 — 2 | 1,2 |
| Wasser | 43 — 50 | 49,0 |

Durch die spezielle Auswahl der eingesetzten Ingredienzen mußte ein Herstellungsverfahren entwickelt werden, da man mit den bekannten Backverfahren kein befriedigendes Ergebnis erzielen konnte. Erst durch den kombinierten Einsatz von Wasserdampf, Heißluft und Mikrowellenbestrahlung konnte die eingesetzte Teigmasse zu einem luftigen, leichten Proteinbrötchen mit einer angenehmen Rösche aufgearbeitet werden.

Das Backverfahren stellt sich wie folgt dar: Die trockenen Ingredienzen werden in einem temperierten Sigmakneter (erhältlich von der Fa. Brabender, Duisburg, unter der Bezeichnung Do-Corder) bei einer Temperatur von 24° C 1 min intensiv bei 60 Upm durchgemischt. Anschließend wird das erforderliche, auf 24° C temperierte Wasser und die Hefe den Trockenstoffen hinzugesetzt. Die Knetung erfolgt bis zum Knetoptimum (etwa 1000 Farinogrammeinheiten) bei 60 — 250 Upm, vorzugsweise 120 Upm, bei einer Temperatur zwischen etwa 26 und 32° C. Je nach der Umdrehungszahl des Sigmakneters beträgt die Knetzeit etwa 10 — 30 min. Die Endtemperatur der Teigmasse beträgt etwa 28° C. Die Einhaltung der Teigtemperaturen ist von entscheidender Bedeutung, insbesondere für die Vernetzung des Weizenklebers und der Quellung des Sojaeiweißkonzentrats. Anschließend wird der Teig ohne Teigruhe mit Hilfe einer temperierbaren Schneckenstrangpresse, an der sich ein rotierendes Messer befindet, nachgeknetet, geformt und portioniert. Vor und während der Pressung der Preßlinge wird der Extruder auf 25 bis 32° C, vorzugsweise 28° C, temperiert. Das Steigungsverhältnis beträgt 1 : 0,3 bis 1 : 0,6 gangrezessiv, vorzugsweise 1 : 0,4. Die ebenfalls temperierbare Austrittsdüse am Extruder hat eine Bohrung von 2 bis 17 mm, vorzugsweise für Brötchen 15 mm und für Knabberartikel 2 mm. Der Schneckendurchmesser beträgt 30 bis 50 mm, vorzugsweise 40 mm, und die Länge der Schnecke beträgt 60 bis 100 mm, vorzugsweise 70 mm. Die Teigeinlage für die Brötchen beträgt 8 bis 15 g und für Snackartikel 1 bis 3 g. Die Preßlinge werden mit Hilfe eines rotierenden Messers von dem Düsenausgang abgeschnitten und in einem Gärraum auf Stückgare gelegt.

Die Bedingungen für den Gärraum sind:

Relative Luftfeuchtigkeit: 75 — 85%
Gärtemperatur: 30 — 40° C

Die Stückgare liegt zwischen 30 — 90 min, vorzugsweise 60 min.

Backphase

Anschließend werden die Teiglinge in einem Heißluft-Umwälzbackofen, kombiniert mit Mikrowellenbestrahlung, ausgebacken. Entscheidend für das Aufgehen der Teigmasse ist, daß in der Anfangsphase dem Backraum genügend Wasserdampf zugeführt wird. Bei ungenügender Wasserdampfzufuhr reißt die Krume des Brötchens bzw. die Oberfläche verkrustet spontan, so daß das Porenbild sowie das Gebäckvolumen nicht in dem gewünschten Maße ausgebildet wird. Gewünscht wird eine feine, langgestreckte Porung. Die Rösche der Krume sollte goldgelb sein. In der zweiten Backphase wird das Gebäck mittels einer Mikrowellenbestrahlung von etwa 650 Watt Nennleistung nachgetrocknet, ohne die Heißluftzufuhr zu drosseln.

Der Backprozeß stellt sich im einzelnen wie folgt dar:

Heißlufttemperatur: 140−200°C, vorzugsweise 180°C,
Wasserdampfzufuhr: etwa 1 min,
Mikrowellen-Nennleistung: 650 Watt pro 50 g Mischung,
Gesamtbackzeit: 3−8 min, vorzugsweise 5 min,
Mikrowellenbestrahlung in der Endphase: 1−3 min, vorzugsweise 1,8 min.

Die nach dem beschriebenen Verfahren erhaltenen Brötchen bzw. Knabberartikel haben eine goldgelbe Rösche. In aufgeschnittener Form präsentiert sich ein weißes, feinporiges Produktbild von fester Struktur. Geschmacklich sind diese Produkte mit den typischen Frühstücksbrötchen zu vergleichen, jedoch sind die neuen Erzeugnisse spezifisch leichter und etwas krosser. Bei einer Teigeinlage von ungefähr 10 g wiegt das Endprodukt etwa 5 g. Die chemische Analyse ergab nachstehende Werte:

Gesamtprotein (N × 6,25) i.TS:           70−75%
Fett:                                     3−5%
Gesamtkohlehydrate:                      18−23%
Feuchtigkeit:                             5−7%

### Beispiel 1

Proteinbrötchen

| Rezeptur | in % |
|---|---|
| Weizenkleber | 35,0 |
| Molkeneiweißkonzentrat | 5,0 |
| Sojaeiweißkonzentrat | 2,9 |
| Weizenkleie | 4,5 |
| Distelöl | 1,5 |
| Trockenhefe | 1,2 |
| Salz | 0,9 |
| Wasser | 49,0 |

Die trockenen Zutaten werden in die temperierte Knetkammer (Do-Corder der Fa. Brabender) gegeben und 1 min bei 60 Upm durchgemischt. Anschließend werden das Wasser, das Distelöl und die Hefelösung dem Mix zugesetzt. Je nach der Verwendung können dem Teig noch Vitamine und Mineralstoffe beigegeben werden. Anschließend wird der Teig bis zum Knetoptimum (etwa 1000 FE) bei 120 Upm geknetet. Die Teigtemperatur beträgt 28°C. Der fertige Teig wird dann mit Hilfe des beschriebenen Extruders nachgeknetet, geformt und portioniert.

Extruderdaten:
  Außenmantel:                  28°C
  Schnecke, Steigungsverhältnis: 1 : 0,4
  Düsenbohrung:                 15 mm
  Schneckenumdrehung:           40 Upm

Teigpreßlinge:
    ungefähr 10 g

Die Teigportionen werden dann 60 min auf Stückgare gestellt.

Gärraumeinstellung:
    Gärtemperatur 35° C, relative Luftfeuchtigkeit 80%

Vor dem Ausbacken der Brötchen wird der Umluftofen 20 min auf 180° C vorgeheizt. In dem vorgeheizten Ofen werden dann 5 Brötchen zu je etwa 10 g Teiggewicht wie folgt ausgebacken. Zu Beginn der Backphase wird der Backraum kontinuierlich mit Wasserdampf beschickt (1 min). Die Gesamtbackzeit beträgt 5 min. In der vierten Minute wird der Mikrowellengenerator zugeschaltet (Nennleistung 650 Watt). Die fertigen Brötchen haben ein spezifisches Volumen von ungefähr 25,3 ml/g.

### Beispiel 2

#### Knabberbällchen

Gleiches Grundrezept wie unter Beispiel 1 beschrieben. Zusätzlich werden dem Teig 1,45% Geschmacksstoffe, z. B. Schinkenspeck, Leberwurst, Gartenkräuter der Firma Haarmann + Reimer zugesetzt. Entsprechend der zugesetzten Geschmacksstoffmenge wird der Wasseranteil gekürzt. Nachkneten, Formen und Portionieren erfolgt mit dem Extruder wie in Beispiel 1. Die Düse wird jedoch durch eine Dreitüllendüse mit einer 2-mm-Bohrung ersetzt. Die Teigeinlage beträgt 1 bis 2 g. Den Gärraumbedingungen, der Stückgare und dem Backprozeß für die Knabberbällchen sind die gleichen Angaben wie vom Beispiel 1 zugrundezulegen. Die fertigen Knabberbällchen haben ein spezifisches Volumen von ungefähr 12,5 ml/g.

### Beispiel 3

#### Aromatisierte Knabberbällchen mit aufgezogenen Gewürzen

Dem Grundrezept werden die gewünschten Geschmacksstoffe hinzugesetzt (wie Beispiel 2). Nach dem Ausformen und dem Portionieren werden die Preßlinge z. B. in Kümmel, Salz, Mohn, Sesam etc. gewälzt und auf Stückgare gestellt. Das Ausbacken erfolgt wie in Beispiel 1.

### Beispiel 4

#### Knabberbällchen mit süßen Überzugsmassen

Das Aufarbeiten und Herstellen der Knabberbällchen erfolgt wie in Beispiel 2. Die ausgebackenen Knabberbällchen werden mit Hilfe der üblichen Überzugsverfahren mit süßen Massen, z. B. Nougat, Kuvertüre, aromatisierten Fettglasuren etc., überzogen und zur Erhärtung der Überzugsmasse durch einen Kühltunnel geschickt. Anschließend kann das überzogene Knabberbällchen mit gefärbten Zukerlösungen dragiert werden.

**Patentansprüche**

1. Hocheiweißangereicherte Backwaren, hergestellt unter Einsatz von Weizenkleber, Kleie, Milchprotein, Sojaeiweiß, Salz, Hefe und Wasser, dadurch gekennzeichnet, daß sie aus einem Gemisch aus

| | |
|---|---|
| 28—38 Gew.-% | Vitalweizenkleber |
| 4—8 Gew.-% | ultrafiltriertem Molkenproteinkonzentrat |
| 1,5—5,5 Gew.-% | denaturiertem Sojaeiweißkonzentrat |
| 2,5—6,5 Gew.-% | Weizenkleie |
| 0,7—1,5 Gew.-% | Salz |
| 1—2 Gew.-% | Trockenhefe |
| 44—52 Gew.-% | Wasser, |

**0 011 174**

bezogen auf das Gesamtgemisch, wobei die Summe der Ingredienzen jeweils 100% beträgt, unter Anwendung folgender Verfahrensschritte hergestellt worden sind:

a) Mischen der trockenen Rezepturbestandteile,
b) Zugabe des Wassers und der Hefe,
c) Kneten der Mischung,
d) Portionieren der Mischung unter Nachkneten und Formen der Portionen,
e) Garen der Portionen,
f) Backen der gegarten Portionen in wasserdampfhaltiger Heißluft mit zusätzlicher Mikrowellenbestrahlung.

2. Backwaren nach Anspruch 1, dadurch gekennzeichnet, daß ein Gemisch aus

| | |
|---|---|
| 35 Gew.-% | Vitalweizenkleber |
| 5 Gew.-% | ultrafiltriertem Molkenproteinkonzentrat |
| 2,9 Gew.-% | denaturiertem Sojaeiweißkonzentrat |
| 4,5 Gew.-% | Weizenkleie |
| 0,9 Gew.-% | Salz |
| 1,2 Gew.-% | Trockenhefe |
| 50,5 Gew.-% | Wasser |

eingesetzt worden ist.

3. Backwaren nach Anspruch 1 oder 2, dadurch gekennzeichnet, daß das Gemisch 1—2 Gew.-%, vorzugsweise 1,5 Gew.-%, Distelöl bei entsprechender Minderung des Wasseranteils enthält, wobei das Öl beim Verfahrensschritt b) zugemischt wird.

4. Backwaren nach Anspruch 3, dadurch gekennzeichnet, daß das Distelöl zusätzlich 4 Gew.-% Weizenkeimöl enthält.

5. Backwaren nach Anspruch 1—4, dadurch gekennzeichnet, daß das Mischen und Kneten bei einer Mischer- bzw. Kneter-Drehzahl zwischen 60 und 250 $^{-1}$, vorzugsweise bei 120 $^{-1}$, und bei einer Temperatur zwischen 26 und 32° C durchgeführt worden ist.

6. Backwaren nach einem der Ansprüche 1 bis 5, dadurch gekennzeichnet, daß man die Mischung bis zu etwa 1000 Farinogramm-Einheiten knetet.

7. Backwaren nach Anspruch 1 bis 6, dadurch gekennzeichnet, daß das Nachkneten gemäß d) mitels einer Schneckenstrangpresse durchgeführt worden ist.

8. Backwaren nach Anspruch 1 bis 7, dadurch gekennzeichnet, daß die gegarten Portionen in einem Heißluftumwälzbackofen in wasserdampfhaltiger Luft von 140 bis 200° C, vorzugsweise 180° C, während 3 bis 8 Minuten, vorzugsweise 5 Minuten, gebacken worden sind und während der letzten 3 bis 1 Minuten, vorzugsweise 1,8 Minuten, der Gesamtbackzeit zusätzlich mit Mikrowellen mit einer Nennleistung von 650 Watt pro 50 g Mischung bestrahlt worden sind.

9. Backwaren nach Anspruch 8, dadurch gekennzeichnet, daß während der ersten Minute der Gesamtbackzeit Wasserdampf zugeführt worden ist.

## Claims

1. High protein-enriched bakery goods, produced by the admixture of wheat gluten, bran, milk protein, soya protein, salt, yeast and water, characterised in that they are produced from a mixture of

| | |
|---|---|
| 28—38 wt.-% | vital wheat gluten |
| 4—8 wt.-% | ultra-filtered whey protein concentrate |
| 1.5—5.5 wt.-% | denaturated soya protein concentrate |
| 2.5—6.5 wt.-% | wheat bran |
| 0.7—1.5 wt.-% | salt |
| 1—2 wt.-% | dry yeast |
| 44—52 wt.-% | water |

based on the total mixture, the sum of the ingredientstotalling 100%, by the following process steps:

a) mixing the dry ingredients of the recipe,
b) addition of the water and the yeast,
c) kneading of the mixture,
d) dividing up the mixture into portions while re-kneading and shaping the portions,
e) proving the portions,
f) baking of the proved portions in hot air containing water vapour with additional microwave radiation.

6

2. Bakery goods according to Claim 1, characterised in that an admixture is prepared of

| | |
|---|---|
| 35 wt.-% | vital wheat gluten |
| 5 wt.-% | ultra-filtered whey protein concentrate |
| 2.9 wt.-% | denaturated soya protein concentrate |
| 4.5 wt.-% | wheat bran |
| 0.9 wt.-% | salt |
| 1.2 wt.-% | dry yeast |
| 50.5 wt.-% | water. |

3. Bakery goods according to Claim 1 or 2, characterised in that the mixture contains 1—2 wt.-%, preferably 1.5 wt.-% safflower oil with a corresponding reduction in the proportion of water, the oil being admixed in process step (b).

4. Bakery goods according to Claim 3, characterised in that the safflower oil contains 4 wt.-% wheat germ oil.

5. Bakery goods according to Claim 1—4, characterised in that the mixing and kneading is carried out at a mixing or kneading rotational speed between 60 and 250 min $^{-1}$, preferably at 120 min$^{-1}$, and at a temperature between 26 and 32° C.

6. Bakery goods according to one of Claims 1 and 5, characterised in that the mixture is kneaded up to approximately 1000 farinogramm units.

7. Bakery goods according to Claims 1 to 6, characterised in that the re-kneading according to step (d) is carried out by means of a spiral extruder.

8. Bakery goods according to Claims 1 to 7, characterised in that the proved portions are baked in a hot air oven in air containing water vapour at 140 to 200° C, preferably 180° C, for 3 to 8 minutes, preferably 5 minutes, and during the last 3 to 1 minutes, preferably 1.8 minutes, of the total baking time are exposed, in addition, to microwaves at a nominal loading of 650 Watt per 50 g mixture.

9. Bakery goods according to Claim 8, characterised in that during the first minute of the total baking time water vapour is supplied.

**Revendications**

1. Produits de boulangerie hautement enrichies en protides préparés à partir de gluten de blé, de son, de protéine de lait, de protide de soja, de sel, de levure, et d'eau, caractérisés en ce qu'ils sont préparés à partir d'un mélange de:

| | |
|---|---|
| 28—38% en poids | en gluten de blé vital |
| 4—8% en poids | en condentré de protéine de petit lait obtenu par ultrafiltration |
| 1,5—5,5% en poids | en concentré de protides de soja dénaturé |
| 2,5—6,5% en poids | en son de blé |
| 0,7—1,5% en poids | en sel |
| 1—2% en poids | en levure sèche |
| 44—52% en poids | en eau |

par rapport au mélange total, en mettant en œuvre les modes opératoires suivants:

a) malaxage des constituants secs de la formule,
b) addition de l'eau et de la levure et éventuellement de l'huile,
c) pétrissage du mélange,
d) division du mélange et formage des portions,
e) affinage des portions,
f) cuisson des portions affinées dans le l'air chaud contenant de la vapeur d'eau, associée à une irradiation aux micro-ondes.

2. Produits de boulangerie selon la revendication 1, caractérisé en ce que l'on met en œuvre un mélange de

| | |
|---|---|
| 35% en poids | en gluten de blé vital |
| 5% en poids | en concentré de protéine de petit lait obtenue par ultrafiltration |
| 2,9% en poids | en concentré de protides de soja dénaturé |
| 4,5% en poids | en son de blé |
| 0,9% en poids | en sel |
| 1,2% en poids | en levure sèche |
| 50,5% en poids | en eau. |

3. Produits de boulangerie selon la revendication 1 ou 2, caractérisés en ce que le mélange contient de 1 à 2% en poids, de préférence 1,5% en poids, d'huile de chardon avec une diminution correspondante de la proportion d'eau, l'huile étant mélangée dans le mode opératoire b).

4. Produits de boulangerie selon la revendication 3, caractérisé en ce que l'huile de chardon contient en outre 4% en poids d'huile de germe de blé.

5. Produits de boulangerie selon les revendications 1 à 4, caractérisés en ce qu'on effectue le malaxage et le pétrissage à une vitesse de rotation d'un malaxeur ou d'un pétrin comprise entre 60 et 250 tours/mn, de préférence vers 120 tours/mn, et à une température comprise entre 26 et 32°C.

6. Produits de boulangerie selon l'une des revendications 1 à 5, caractérisés en ce qu'on pétrit le mélange jusqu' environ 1000 unités au farinogramme.

7. Produits de boulangerie selon l'une des revendications 1 à 6, caractérisés en ce que le pétrissage complémentaire selon d) est réalisé au moyen d'une boudineuse.

8. Produits de boulangerie selon l'une des revendications 1 à 7, caractérisés en ce que les portions affinées ont été cuites dans un four de cuisson à circulation d'air chaud, dans de l'air contenant de la vapeur d'eau à environ 140—200°C, de préférence à 180°C, pendant environ 3 à 8 minutes, de préférence 5 minutes, et ont été cuites pendant les dernières 3 à 1 minutes, et de préférence 1,8 minutes, du temps global de cuisson, avec des micro-ondes à une puissance nominale d'environ 650 watts pour 50 g de mélange.

9. Produits de boulangerie selon la revendication 8, caractérisés en ce qu'on introduit de la vapeur d'eau pendant la dernière minute du temps de cuisson total.